# EUROPEAN PATENT APPLICATION

(11) **EP 1 994 976 A1**
(43) Date of publication of application: **26.11.2008**
(21) Application number: 07706559.7
(22) Date of filing: 11.01.2007
(51) Int. Cl.: B01D 63/02, B01D 63/00

(54) **HOLLOW-FIBER MODULE AND PROCESS FOR PRODUCING THE SAME**

(30) Priority: 12.01.2006 JP 2006005282
(71) Applicant: Kureha Corporation, Chuo-ku Tokyo 103-8552 (JP)
(72) Inventor: TADA, Yasuhiro, Ibaraki 311-3436 (JP); HINO, Masayuki, Ibaraki 311-3436 (JP); MUKUMOTO, Takaaki, Ibaraki 311-3436 (JP); MIZUNO, Toshiya, Ibaraki 311-3436 (JP); MIZUTANI, Teizo, Osaka 571-0042 (JP)
(74) Representative: Kortekaas, Marcel C.J.A.
(86) International application number: PCT/JP2007/050212
(87) International publication number: WO 2007/080910

(57) **Abstract**

An object of the present invention is to provide a method for manufacturing a hollow fiber module that makes it possible to decrease the spacing between a plurality of hollow fiber sheets and facilitate the formation of a potting portion with a two-layer structure. The method for manufacturing a hollow fiber module of a preferred embodiment includes: a first step of preparing a plurality of units in which a plurality of hollow fibers are fixed and provided side by side at the end portion side thereof on plate-shaped members; a second step of laminating the plurality of units so that portions of the plate-shaped members overlap via a first curable resin and filling a partial region on a side opposite the end portion side between the adjacent plate-shaped members with the first curable resin; and a third step of filling a region on the end portion side from the first curable resin between the adjacent plate-shaped members with a second curable resin having a hardness after curing that is higher than that of the first curable resin, and then curing the second curable resin.

## Description

### Technical Field

The present invention relates to a hollow fiber module, more particularly to a flat hollow fiber module, and a method for manufacturing same.

### Background Art

A hollow fiber module is a filtration device suitable for precision filtration or ultrafiltration using porous hollow fibers (hollow fiber membrane), and such modules have been expected to find application in the fields of water supply, sewerage treatment, wastewater treatment, and the like. A hollow fiber module that has a configuration in which a bundle of porous hollow fibers is introduced into a cylindrical case is known. A flat (screen-shaped) module with a configuration in which a plurality of hollow fibers are arranged side by side in a sheet-like fashion has also been investigated.

In recent years, the use of the above-described hollow fiber modules for treating large amounts of liquid in water purification plants, sewerage treatment plants, and wastewater treatment facilities has been studied. Because the treatment capacity of one module is insufficient for these applications, an assembly of a plurality of modules is used. In this case, the flat modules are more suitable for the above-described applications than the cylindrical modules because the cross-sectional shape of the flat modules makes it possible to arrange them easily with a small spacing in a predetermined space.

In the hollow fiber modules, a hollow fiber group composed of a plurality of hollow fibers is typically fixed (potted) at both end portions thereof inside a cylindrical case or a case for potting the end portions with a cured product of a resin material that is called a potting agent. Thermosetting resins such as epoxy resins and urethane resins that excel in hardness and adhesive properties have been used as such potting agents.

However, when potting is performed with such hard resin material, because the end portions of a hollow fiber group are fixed by the hard resin, stresses easily concentrate in the root portions where the ends are fixed. As a result, in the conventional hollow fiber modules, the hollow fibers sometimes break (rupture) in the root portions. In order to avoid this inconvenience, an attempt has been made to relax the stresses applied to this portion by employing a two-layer structure of the portion that has been potted (potting portion), this structure being composed of a hard resin layer that fixes the end portions of the hollow fibers and a soft resin layer from a silicone resin or the like on the hard resin layer, and covering the root portion of the hollow fibers with the soft resin layer.

A method for forming a potting portion of such two-layer structure in the above-described flat module is known, this method comprising the steps of inserting a sheet-like hollow fiber group (hollow fiber sheet) in a slit provided in a predetermined housing and then successively charging potting agents of two kinds into the housing (see Patent Document 1).
[Patent Document 1] Japanese Patent Application Laid-open No. 2003-135935.

### Disclosure of the Invention

### Problems to be Solved by the Invention

However, in the hollow fiber module obtained by the aforementioned conventional manufacturing method, one hollow fiber sheet is fixed inside the housing that has a width larger than the sheet thickness. As a result, when a plurality of such hollow fiber modules are to be disposed within a predetermined region, a large spacing is formed between the adjacent hollow fiber sheets and a sufficient treatment capacity corresponding to the entire size is generally difficult to obtain.

With the foregoing in view, it is an object of the present invention to provide a method for manufacturing a hollow fiber module that makes it possible to decrease the spacing between a plurality of hollow fiber sheets and facilitate the formation of a potting portion with a two-layer structure. Another object of the present invention is to provide a hollow fiber module that can be advantageously obtained by such manufacturing method.

### Means for Solving the Problem

In order to attain the above-described object, the present invention provides a method for manufacturing a hollow fiber module, comprising: a first step of preparing a plurality of units in which a plurality of hollow fibers are provided side by side on plate-shaped members so that the hollow fibers are fixed on at least one end portion side thereof; a second step of laminating the plurality of units so that portions of the plate-shaped members overlap via a first curable resin and filling a partial region on a side opposite the end portion side between the adjacent plate-shaped members with the first curable resin; and a third step of filling a region on the end portion side from the partial region between the adjacent plate-shaped members with a second curable resin having a hardness after curing that is higher than that of the first curable resin, and then curing the second curable resin.

In the method for manufacturing a hollow fiber module in accordance with the present invention, a plurality of hollow fiber groups (hollow fiber sheets) that are arranged side by side are successively stacked, while sandwiching only the plate-shaped members therebetween. Therefore, the spacing between hollow fiber sheets can be decreased by comparison with that in the conventional hollow fiber module in which one housing is necessary for one hollow fiber sheet.

In the case of the above-described configuration, because no housing is used, it is usually very difficult to form a potting portion with a two-layer structure by the conventional method of successively charging potting agents of two kinds. By contrast, in accordance with the present invention, a first potting agent that can form a soft potting portion is initially disposed on the root side where the hollow fibers located between the plate-shaped members are fixed, and then the second potting agent for fixing end portions is charged into the region located on the end portion side from the first potting agent located between the plate-shaped members. With such potting method, because it is not necessary to charge successively the potting agents of two kinds as described hereinabove, a potting portion with a two-layer structure can be formed even when a housing is not used for each one hollow fiber sheet.

In the above-described method for manufacturing a hollow fiber module, it is preferred that an air tube be disposed substantially parallel to the hollow fibers between at least one pair of the adjacent plate-shaped members, so as to pass through the first and second curable resins.

In hollow fiber modules, contaminants removed from the treated water sometimes adhere to the hollow fibers when the module is used, and such adhesion of contaminants tends to decrease the filtration efficiency by clogging the membrane. For this reason, in the hollow fiber modules, contaminants that adhered to hollow fibers are frequently removed (scrubbed off) by blowing air bubbles (bubbling) onto the hollow fibers. Such scrubbing is usually performed by blowing air from the outside of the hollow fiber groups.

By contrast, with the manufacturing method in accordance with the present invention, an air tube is disposed substantially parallel to the hollow fibers between the plate-shaped members. Therefore, a blowing port can be provided in the same plane with the hollow fiber sheet. As a result, in the obtained hollow fiber module, it is possible to blow a sufficient amount of air bubbles from the inside of the hollow fiber group, which is difficult with the conventional modules, and the contaminants can be removed with good efficiency. Further, by blowing air bubbles in this manner, it is also possible to create a flow of treatment liquid along the longitudinal direction of hollow fibers, thereby reducing the adhesion of contaminants to the hollow fibers.

The hollow fiber module in accordance with the present invention can be advantageously obtained by the manufacturing method in accordance with the present invention and is a hollow fiber module in which a plurality of sheet-like hollow fiber groups (hollow fiber sheets) composed of a plurality of hollow fibers arranged side by side are laminated and both end portions thereof are fixed, wherein at least one end portion is fixed by disposing plate-shaped members between the adjacent hollow fiber groups and filling a region between the adjacent plate-shaped members with a resin cured product.

Thus, the hollow fiber module in accordance with the present invention has a configuration in which a plurality of hollow fiber sheets are laminated via plate-shaped members. Therefore, the spacing between a plurality of hollow fiber sheets can be decreased by comparison with that in the conventional hollow fiber module in which one housing is used for one sheet. As a result, when a plurality of hollow fiber modules in accordance with the present invention are disposed in a predetermined region, the density of hollow fibers related to the entire size is increased and a large treatment capacity can be ensured.

In the hollow fiber module in accordance with the present invention, the resin cured product that has to constitute the potting portion is formed from a first resin cured product that fills a partial region on a side opposite the end portion side of the hollow fiber group between the adjacent plate-shaped members and a second resin cured product that has a hardness higher than that of the first resin cured product and fills a region on the end portion side from the partial region. With such a configuration, the fixing portion of each hollow fiber is covered with the soft second resin cured products and fracture (rupture) in the root portion of hollow fibers can be substantially reduced.

Further, in the hollow fiber module, an air tube is preferably disposed substantially parallel to the hollow fibers between at least one pair of the adjacent plate-shaped members, so as to pass through the resin cured products. In this case, air bubbles can be blown from within the same plane as the hollow fiber sheet and, therefore, scrubbing of hollow fibers can be performed with good efficiency.

### Effects of the Invention

In accordance with the present invention, it is possible to provide a method for manufacturing a hollow fiber module that makes it possible to decrease the spacing between a plurality of hollow fiber sheets and facilitate the formation of a potting portion with a two-layer structure. Further, in accordance with the present invention, it is possible to provide a hollow fiber module that can be advantageously manufactured by the manufacturing method in accordance with the present invention, has decreased spacing between the hollow fiber sheets, and can ensure excellent filtration efficiency within a predetermined region.

### Brief Description of the Drawings

FIG. 1 is a perspective view of a hollow fiber module of a preferred embodiment.
FIG. 2 shows schematically a cross-sectional configuration of the air header 10 along the II-II line.
FIG. 3 shows schematically a cross-sectional configuration of the air header 10 along the III-III line.
FIG. 4 shows schematically a cross-sectional configuration of the water collecting header 20 along the IV-IV line.
FIG. 5 shows schematically a cross-sectional configuration of the water collecting header 20 along the V-V line.
FIG. 6 illustrates a step of manufacturing a hollow fiber sheet in which a plurality of hollow fibers are arranged side by side.
FIG. 7 is a perspective view illustrating a step of laminating a plurality of hollow fiber units.
FIG. 8 illustrates schematically a step of supplying a second potting agent to the end portion of the laminated structural body.

### Explanation of Reference Numerals

10...air header, 12...air introducing port, 14...casing, 15...potting portion, 16...air flow channel, 20...water collecting header, 22...filtrate discharge port, 24...casing, 25...potting portion, 26...water collecting flow channel, 32...hollow fiber sheet, 34...hollow fiber, 36...hollow fiber unit, 40...air tube, 50, 50a, 50b...plate-shaped member, 60...potting agent cured product, 60a...first potting agent cured product, 60b...second potting agent cured product, 62...first potting agent, 64 ... second potting agent, 70...laminated structural body, 100...hollow fiber module.

### Best Mode for Carrying Out the Invention

The preferred embodiment of the present invention will be described below with reference to the appended drawings. In the explanation of the drawings, identical elements are assigned with identical reference symbols, and redundant explanation thereof is omitted. The mutual arrangement of components, such as up-down and left-right arrangement, is based on the mutual arrangement in the figures.

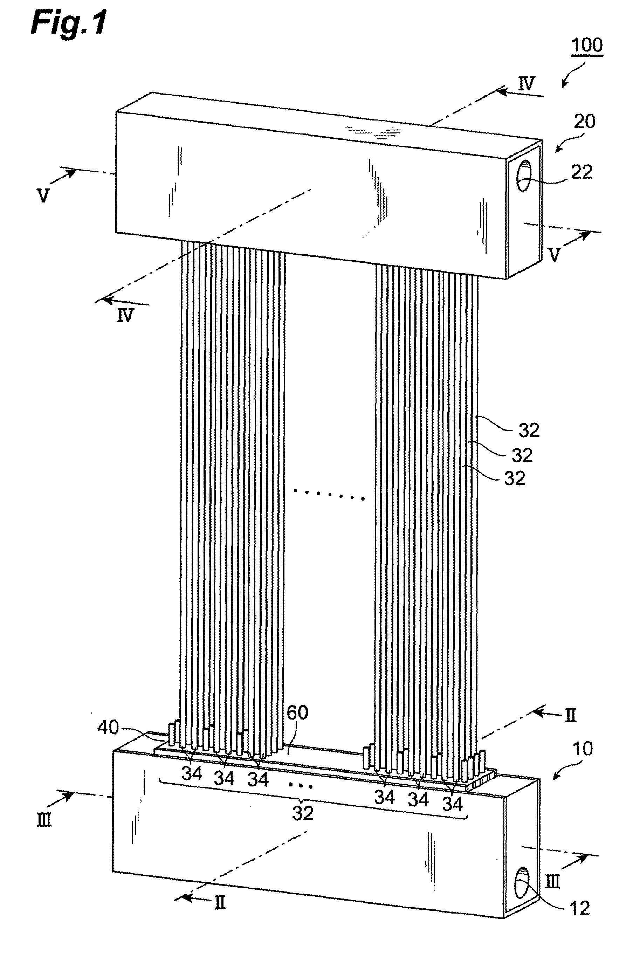

First, the entire structure of a hollow fiber module that is a preferred embodiment of the present invention will be explained with reference to FIG. 1.

FIG. 1 is a perspective view illustrating the hollow fiber module of a preferred embodiment. A hollow fiber module 100 is composed of a plurality of hollow fibers 34 and also an air header 10 and a water collecting header 20 that fix both end portions of the hollow fibers. The hollow fiber module 100 is a flat hollow fiber module in which a horizontal section has a rectangular shape. In the subsequent explanation of the hollow fiber module 100 and a method for manufacturing same, for the convenience of explanation, the hollow fibers 34 will be used as a reference, the direction toward the end portion of the hollow fibers 34 will be described as "the end portion side" and the direction toward the central portion of the hollow fibers 34 will be described as "the central side".

A plurality of hollow fibers 34 are arranged side by side in one direction (left-right direction in the figure), thereby configuring a hollow fiber sheet 32. The pitch of hollow fibers 34 in the hollow fiber sheet 32 can be, for example, 3.5 mm. The hollow fiber 34 is a porous hollow fiber (hollow fiber membrane) having a hollow structure inside thereof. For example, the hollow fibers are preferably composed of polyvinylidene fluoride (PVDF). Examples of suitable hollow fibers 34 are hollow fibers with an outer diameter of about 1.3 mm and an inner diameter of about 0.8 mm. The hollow fiber module 100 of the present embodiment has a structure in which four hollow fiber sheets 32 are laminated substantially parallel to the vertical direction (front-back direction in the figure) of the sheets.

Both end portions of the hollow fibers 34 are fixed in the air header 10 and water collecting header 20. The length between the air header 10 and water collecting header 20 is not particularly limited and can be, for example, about 1000 mm. Regions outside the hollow fibers 34 in the fixing portions in the air header 10 and water collecting header 20 are filled with a potting agent cured product 60 (resin cured product). The end portions of the hollow fibers 34 are thus fixed to the respective portions of headers 10, 20.

Air introducing ports 12 are provided in both side surfaces parallel to the stacking direction of hollow fiber sheets 32 in the air header 10. In the air header 10, a plurality of air tubes 40 protrude from the potting agent cured product 60. Each air tube 40 is provided between hollow fibers 34 constituting each hollow fiber sheet 32 and is disposed for a predetermined number (in this case, two) of hollow fibers 34. On the other hand, filtrate discharge ports 22 are provided in similar side surfaces in the water collecting header 20.

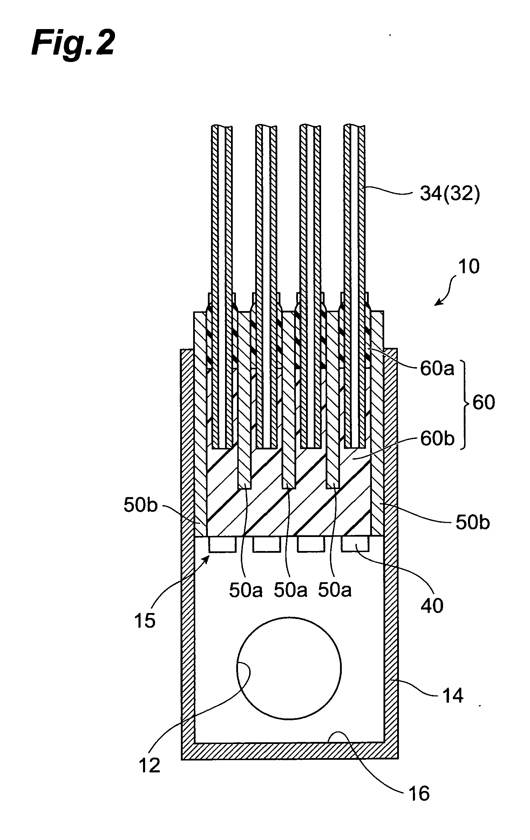

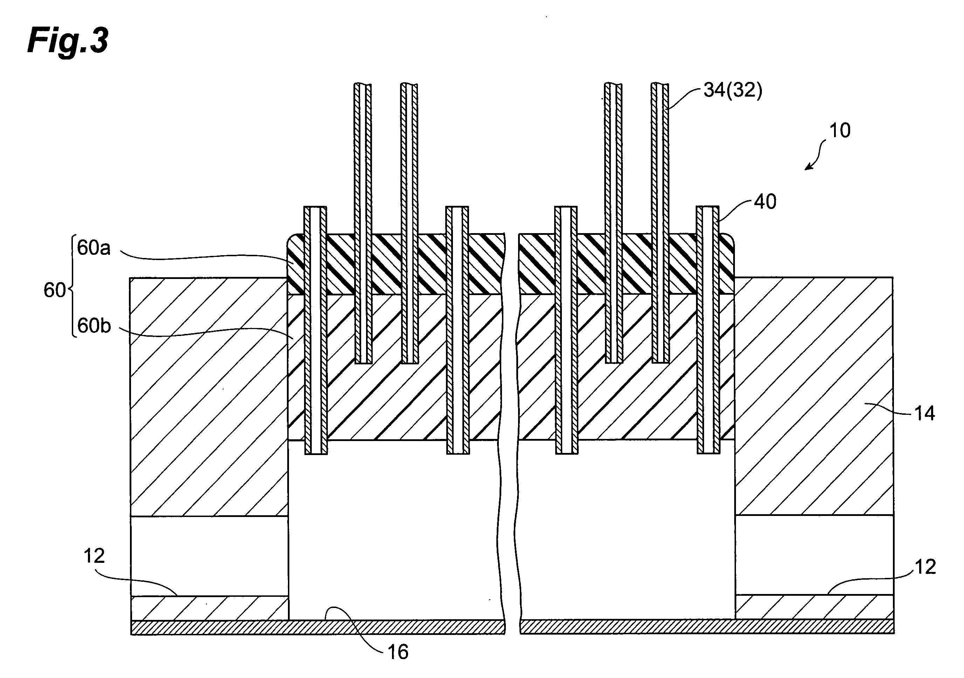

The configuration of a portion of air header 10 will be described below in greater detail with reference to FIG. 2 and FIG. 3.

FIG. 2 shows schematically a cross-sectional configuration of the air header 10 along the II-II line, this cross section including the hollow fibers 34. FIG. 3 shows schematically a cross-sectional configuration of the air header 10 along the III-III line. The air header 10 has a structure in which end portions of hollow fiber sheets 32 are inserted from an open side surface and fixed in a casting 14 in the form of a rectangular parallelepiped in which one side surface is open.

A region on the central side (upper side in the figure) within the casing 14 becomes a potting portion 15 in which end portions of the hollow fiber sheets 32 are inserted and fixed by the potting agent cured product 60. On the other hand, a region on the end portion side (lower side in the figure) from the potting portion 15 inside the casing 14 is made hollow to configure an air flow channel 16.

In the potting portion 15, the hollow fiber sheets 32 and plate-shaped members 50 are disposed alternately so that the plate-shaped member 50 is located on the outer side (see FIG. 2). Such plate-shaped members 50 include plate-shaped members 50a sandwiched between the adjacent hollow fiber sheets 32 and plate-shaped members 50b disposed on the outermost side. The external plate-shaped members 50b have a width (length in the up-down direction in the figure) larger than that of the internal plate-shaped members 50a. The plate-shaped members 50b are disposed to protrude further to the end portion side than the plate-shaped members 50a.

In such potting portion 15, the region located between the pair of plate-shaped members 50b on the outermost side is filled with the potting agent cured product 60. Therefore, the regions between the adjacent plate-shaped members 50 assume a state in which end portions of the hollow fiber sheets 32 are inserted therein and the region outside thereof is filled with the potting agent cured product 60. Each hollow fiber sheet 32 is fixed between the plate-shaped members 50 in the vicinity of the sheet end portion.

Further, the end portion of the hollow fiber sheet 32 is positioned on the central side of the end surface of the potting portion 15 on the end portion side. In other words, the end portions of hollow fibers 34 that constitute the hollow fiber sheet 32 are in a state in which they are covered by the potting agent cured product 60. With such configuration the hollow portions of hollow fibers 34 are closed in the end portion on the side of the air header 10.

The potting agent cured product 60 has a two-layer structure composed of a first potting agent cured product 60a (first resin cured product) and a second potting agent cured product 60b (second resin cured product). The first potting agent cured product 60a fills a partial region on the central side between the adjacent plate-shaped members 50, so that the end portions of the hollow fiber sheet 32 (hollow fibers 34) are not included, and protrudes practically to the central side along the hollow fibers 34. On the other hand, the second potting agent cured product 60b fills a region on the end portion side from the first potting agent cured product 60a. As a result, in the potting portion 15, the end portions of the hollow fibers 34 are fixed by the second potting agent cured product 60b, whereas the root portions protruding to the central side are covered by the first potting agent cured product 60a.

The second potting agent cured product 60b has a hardness higher than that of the first potting agent cured product 60a. In other words, the first potting agent cured product 60a is softer than the second potting agent cured product 60b. Thus, covering the root portion where the hollow fibers 34 are fixed with the comparatively soft first potting agent cured product 60a facilitates the relaxation of stresses applied to this portions. As a result, rupture of hollow fibers 34 in this portion can be reduced.

Here, a value of "A hardness" or "D hardness" stipulated by JIS K6253 can be employed as the aforementioned "hardness", and this value can be obtained by measuring with a type-A durometer or type-D durometer, respectively. The preferred A hardness of the first potting agent cured product 60a is about 10 to 80, more preferably about 20 to 40, and a cured product of a silicone resin is preferred. Further, the preferred D hardness of the second potting agent cured product 60b is about 30 to 98, more preferably about 40 to 60, and a cured product of urethane resin or epoxy resin is preferred.

A plurality of air tubes 40 that pass through the potting agent cured product 60 are disposed substantially parallel to the hollow fibers 34 in the potting portion 15. Such air tube 40 is provided between hollow fibers 34, which are arranged side by side in each hollow fiber sheet 32, and disposed for a predetermined number (in this case, two) of hollow fibers 34. Because one end of air tube 40 protrudes to the central side from the potting portion 15 and the other end protrudes to the end portion side from the potting portion 15, the central side and end portion side (air flow channel 16) of the potting portion 15 communicate with each other. Because the air tubes 40 thus protrude to the central side, air bubbles can be released in a position close to the hollow fibers 34, which is beneficial for the below-described scrubbing.

The region on the end portion side inside the casing 14 has, as described above, a hollow structure and constitutes the air flow channel 16. Further, as described above, the air introducing port 12 is provided in both side surfaces parallel to the stacking direction of the hollow fiber sheets 32 in the casing 14. The air introducing port 12 is provided in a portion of the air flow channel 16. A pump or the like for introducing the air to the air flow channel 16 is connected to the air introducing port 12 via a predetermined connection tube or the like (this configuration is not shown in the figure), thereby making it possible to feed the air into the air flow channel 16.

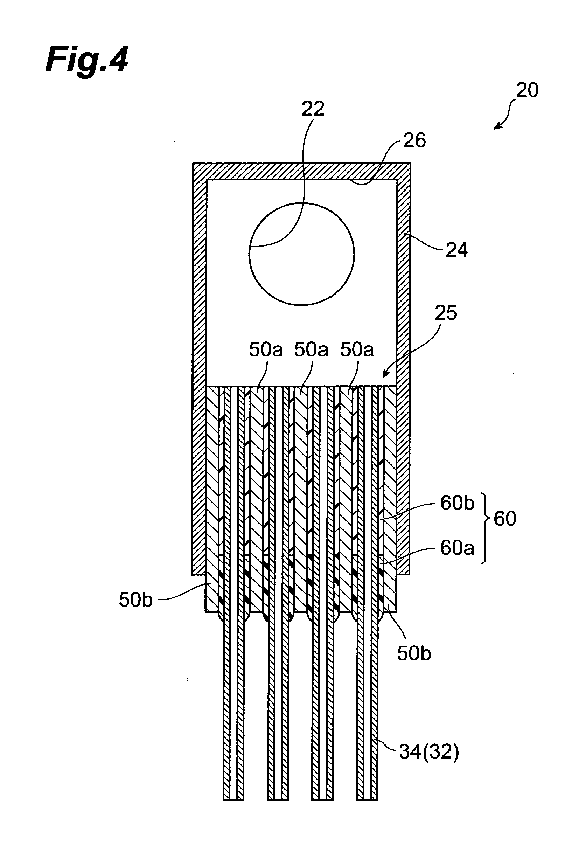

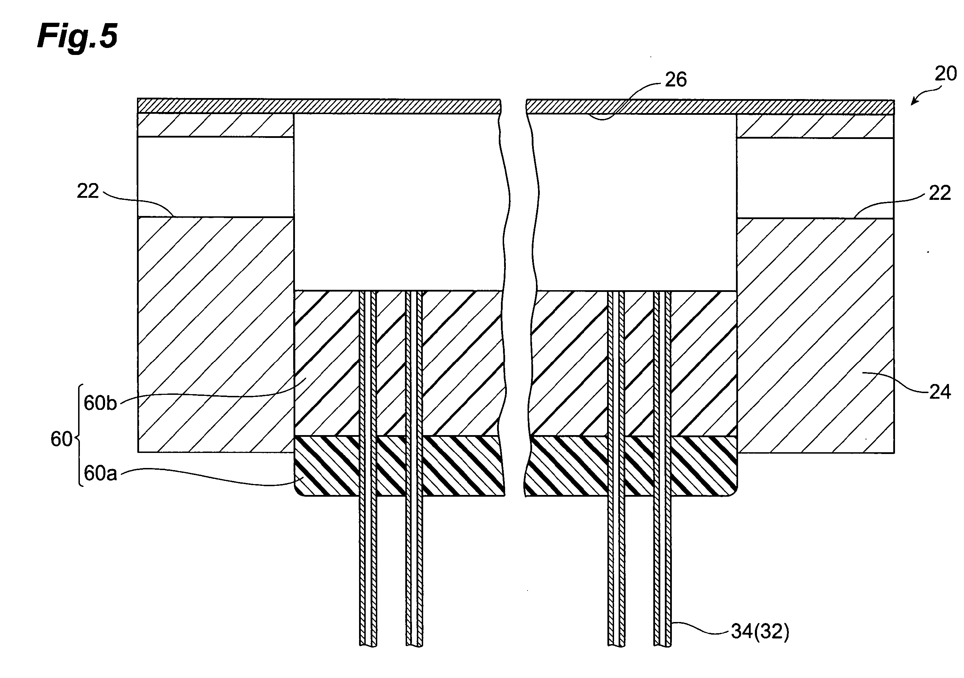

The configuration of a portion of water collecting header 20 will be described below in greater detail with reference to FIG. 4 and FIG. 5.

FIG. 4 shows schematically a cross-sectional configuration of the water collecting header 20 along the IV-IV line, this cross section including the hollow fibers 34 of each hollow fiber sheet 32. FIG. 5 shows schematically a cross-sectional configuration of the water collecting header 20 along the V-V line. The water collecting header 20 has a structure in which end portions of hollow fiber sheets 32 are inserted from an open side surface and fixed in a casting 24 in the form of a rectangular parallelepiped in which one side surface is open.

A region on the central side within the casing 24 becomes a potting portion 25 in which end portions of the hollow fiber sheets 32 are inserted and fixed by the potting agent cured product 60. On the other hand, a region on the end portion side from the potting portion 25 inside the casing 24 is made hollow to configure a water collecting flow channel 26.

The potting portion 25, has a configuration substantially identical to that of the potting portion 15 on the side of the above-described hollow header 10, but differs therefrom in the aspects as follows. Thus, first, the end portions of hollow fiber sheets 32 are exposed on the end surface on the end portion side of the potting agent cured product 60 in the potting portion 25. As a result, the hollow fibers 34 constituting the hollow fiber sheet 32 are opened at this end surface. Further, as shown in the figure, the potting portion 25 has a structure having no air tubes 40.

In the portion of water collecting flow channel 26 in the casing 24, the filtrate discharge ports 22 are provided in both side surfaces that are parallel to the stacking direction of the hollow fiber sheets 32. The water collecting flow channel 26 communicates with the outside of the casing 24 via the filtrate discharge ports 22. Filtrate discharge tubes (not shown in the figure) or the like are attached to the filtrate discharge ports 22, so that the filtrate collected in the water collecting flow channel 26 can be taken out to the outside.

A configuration of the hollow fiber module 100 of the preferred embodiment is described above, and such hollow fiber module 100 can be used for water purification treatment by which liquid to be treated is purified by removing contaminants therefrom. A method for purifying the liquid to be treated by using the hollow fiber module 100 will be explained below.

When the liquid to be treated is purified, the hollow fiber module 100 is immersed from the side of the air header 10 to the vicinity of the water collecting header 20 into the liquid to be treated. The liquid to be treated passes through the membrane surface (wall surface) of hollow fibers 34 and permeates into the hollow portions of hollow fibers. In this process, contaminants contained in the liquid to be treated are entrapped on the membrane surface of hollow fibers 12. Therefore, only the filtrate that has been filtered by the membrane surface and from which contaminants have been removed enters the hollow portions. The filtrate that has entered the hollow portions of hollow fibers 12 is moved to the water collecting header 20 via the hollow portions by suction and the like. Then, the filtrate is discharged from the openings of the end portions on the upper side of hollow fibers 34 and enters the water collecting flow channel 26. The filtrate that has entered the water collecting flow channel 26 is discharged to the outside from the filtrate discharge ports 22. As a result, contaminants are removed from the liquid to be treated with the hollow fiber module 100 and the liquid is purified.

In such liquid purification, the air is fed from the outside via the air introducing ports 12 into the air flow channel 16 in the air header 10. The air fed into the air flow channel 16 is discharged to the central side of the potting portion 15 via the air tubes 40. This air is in the form of bubbles and it rises up in the liquid to be treated. In this process, because the air bubbles rise along the hollow fibers 34 in the hollow fiber sheet 32, the air bubbles cause the hollow fibers 34 to vibrate. As a result, contaminants that have adhered to the membrane surface during filtration with the hollow fibers 34 are removed (scrubbed off) from the hollow fibers 34 by such vibrations.

Thus, with the hollow fiber module 100 of the present embodiment, contaminants that adhered to the hollow fibers 34 can be removed, while performing the purification of the liquid to be treated. Therefore, effective purification can be performed with good stability.

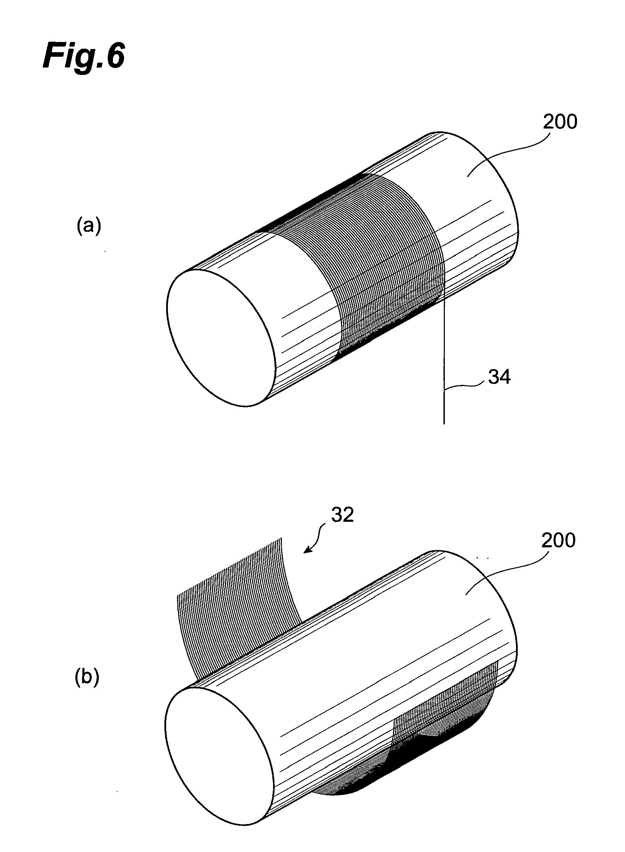

The preferred method for manufacturing a hollow fiber module having the above-described configuration will be described below with reference to FIGS. 6 to 8.

First, a hollow fiber sheet 32 (a sheet-like group of hollow fibers) in which a plurality of hollow fibers 34 are arranged side by side is formed. FIG. 6 illustrates a step of manufacturing a hollow fiber sheet in which a plurality of hollow fibers are arranged side by side. A reeled body or the like of hollow fiber 34 is prepared and then the hollow fiber 34 is wound around a cylindrical roll 200 as shown in (a) of FIG. 6. In this case, the winding position of the hollow fiber 34 gradually shifts, so that the turns of the hollow fiber 34 are arranged side by side in the height direction of the cylinder.

Then, as shown in (b) of FIG. 6, the hollow fiber 34 wound around the roll 200 is cut along a straight line along the height direction of the cylinder. In this case, the hollow fiber 34 in a wound state thereof may be fixed with a pressure-sensitive adhesive tape or the like to prevent the hollow fibers 34 from scattering after cutting. The hollow fiber sheet 32 in which the hollow fibers 34 are arranged side by side is thus obtained.

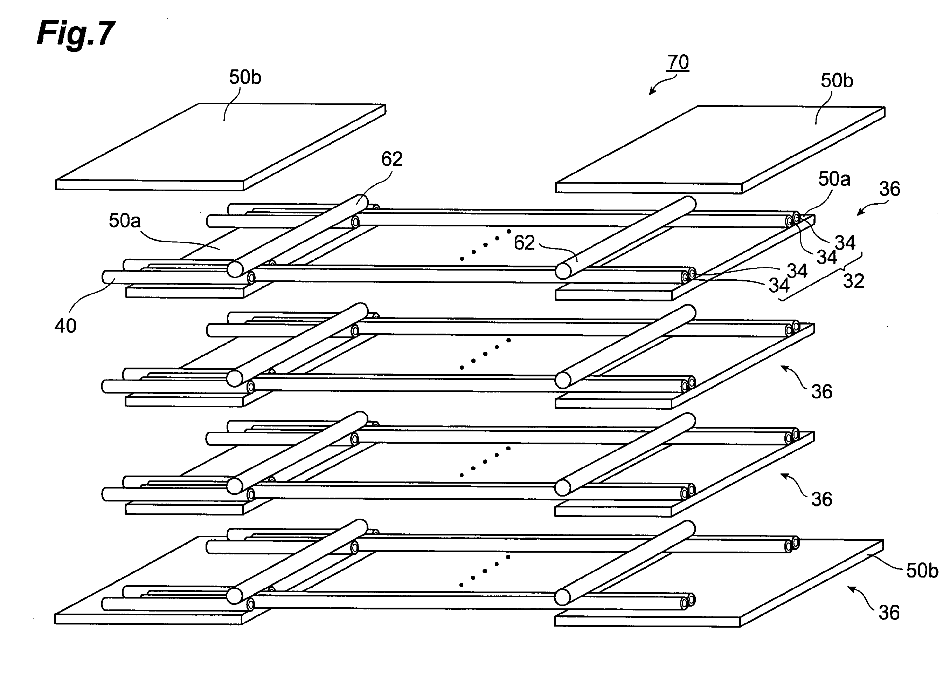

Both end portion sides (end portion sides in the fiber axis direction of hollow fibers 34) of the obtained hollow fiber sheet 32 are fixed on the plate-shaped member 50 extending in the direction crossing the hollow fibers 32 and a hollow fiber unit 36 is obtained (see FIG. 7). In this case, the end portion of each hollow fiber 34 may be disposed on the plate-shaped member 50, or may protrude from the plate-shaped member 50. The hollow fiber sheet 32 can be fixed onto the plate-shaped member 50, for example, but joining the two with a two-side adhesive tape. The hollow fiber sheet 32 fixed to the plate-shaped member 50 can be also obtained by attaching the plate-shaped member 50 to hollow fibers 34 wound around the roll 200 and then cutting the hollow fibers 34 in the same manner as described above. With such method, by attaching the plate-shaped member 50, it is possible to prevent the hollow fibers 34 from scattering and the operation of fixing with the aforementioned pressure-sensitive adhesive tape can be omitted.

Further, a tubular air tube 40 is disposed substantially parallel to the hollow fibers 34 for a predetermined number (in this case, two) of hollow fibers 34 in the hollow fiber sheet 32 on the plate-shaped member 50 on the side that will be the side of the air header 10 in the hollow fiber module 100. This air tube 40 is assumed to have a length such that the air tube passes through the entire potting agent cured product 60 that will thereafter be formed.

The first potting agent (first curable resin) 62 that will become the first potting agent cured product 60a upon curing is disposed so as to sandwich the hollow fiber sheet 32 (and the air tube 40) on the plate-shaped member 50 in each hollow fiber unit 36. A plurality (four in the present embodiment) of such hollow fiber units 36 are prepared correspondingly to the number of hollow fiber sheets 32 in the hollow fiber module 100 (first step).

FIG. 7 is a perspective view illustrating a step of laminating a plurality of hollow fiber units. As shown in the figure, after the hollow fiber units 36 have been formed, a plurality of hollow fiber units 36 having the first potting agent 62 attached thereto are successively laminated so as to overlap in a portion of the plate-shaped member 50 (second step). Further, a separate plate-shaped member 50 is then laminated from the outside of the first potting agent 62 on the outer side in the laminated structure composed of four hollow fiber units. As a result, a laminated structural body 70 is obtained that has a structure (a portion of this structure will be referred to hereinbelow as "fixing portion") in which a plurality of hollow fiber sheets 32 are laminated and the plate-shaped members 50 and hollow fiber sheets 32 are disposed alternately in both end portions.

It is preferred that the first potting agent 62 provide the first potting agent cured product 60a, which will be obtained after curing, with the above-described properties and have a viscosity preventing it from flowing after placement on the plate-shaped member 50. A silicone resin is preferred as such first potting agent. Specific examples of suitable resins include condensation-type or addition-type liquid silicone rubbers.

The preferred condensation-type liquid silicone rubbers are preferably one-component room-temperature curable rubbers of an oxime type or alcohol type that are cured by reaction with moisture contained in the air. With such rubbers, a mixing device or heating device is not required for curing. On the other hand, because one-component addition-type liquid silicone rubbers require storage at a low temperature, two-components rubbers are preferred from the standpoint of shelf life and handleability. In the addition-type liquid silicone rubbers, curing tends to be inhibited by water, sulfur, nitrogen compound, organometallic salts, phosphorus compounds, and the like. For this reason, when the below-described second potting agent 64 contains these components or they are produced as byproducts during curing, it is preferred that the first potting agent 62 composed of an addition-type liquid silicone rubber be cured prior to injecting the second potting agent 64.

The viscosity (in the case of a two-component composition, the viscosity of a mixture of the main component and curing agent) of the first potting agent 62 at the time it is disposed on the plate-shaped member 50 is preferably 10 to 10000 Pa·s, more preferably 100 to 1000 Pa·s. Where the viscosity is less than 10 Pa·s, the first potting agent 62 placed on the plate-shaped member 50 can easily flow out from the plate-shaped member 50. On the other hand, where the viscosity exceeds 10000 Pa·s, the potting agent can crush the hollow fibers 34 during lamination.

The plate-shaped members 50a and the plate-shaped members 50b that have a larger length (width) along the axial direction of hollow fibers 34 are used as the plate-shaped members 50. Thus, the plate-shaped members 50a are sandwiched between the adjacent hollow fiber sheets 32, and the plate-shaped members 50b are disposed on both outer sides. In the above-described laminates, the end portion side of the plate-shaped member 50b is disposed farther on the end portion side (outside in the figure) than the end portion side of the plate-shaped member 50a.

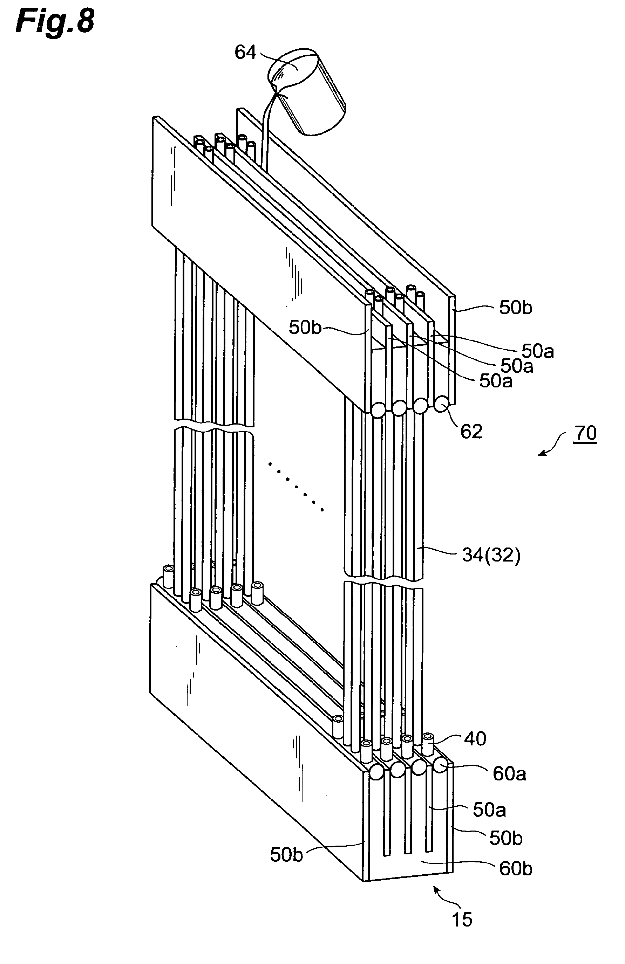

As a result of the above-described lamination, the zones close to the end portions of the hollow fiber sheets 32 and the first potting agent 62 are sandwiched between the adjacent plate-shaped members 50 (see FIG. 8). In this lamination, a partial region on the central side within the region sandwiched between the adjacent plate-shaped members 50 is filled with the first potting agent 62. Further, at least the end portions of the hollow fiber sheet 32 protrude to the end portion side from the first potting agent 62. As a result, a state is assumed in which the partial region on the central side within the region sandwiched between the plate-shaped members 50 is closed and the end portion side outside this partial region is open. The first potting agent 62 preferably closes at least the opening end surface on the central side in the region sandwiched between the plate-shaped members 50 and even more preferably somewhat protrudes from the opening end surface to the central side.

Then, the second potting agent (second curable resin) 64 is supplied to the fixing portions on both end portion sides in the laminated structural body 70 and cured (third step). FIG. 8 shows schematically a step of supplying a second potting agent to the end portion of the laminated structural body. In this step, the fixing portions of both end portions of the structural laminated body 70 are filled with the potting agent cured product 60 (potting agent cured products 60a and 60b), and the potting portion 15 and potting portion 25 are formed. An example of the process for forming the potting portions 15, 25 will be explained below.

For example, when the potting portion 15 is formed, first, the laminated structural body 70 is disposed so that the fixing portion on the side where the air header 10 will be located (the side where the air tube 40 has been disposed) is on the upper side. Then, the open side surface of this fixing portion is closed and the second potting agent 64 is thereafter injected from the end portion side into this fixing portion. As a result, the region surrounded by the two plate-shaped members 50b located on the outermost side is filled with the second potting agent 64. In this case, because the first potting agent 62 acts as a dam, the second potting agent 64 is prevented from leaking out to the zone below the first potting agent 62.

The second potting agent 64 is injected so that it does not reach the end portion of the air tube 40 and is at least on the end portion side from the end portion of the hollow fiber sheet 32. As a result, the second potting agent 64 is charged at least so as to cover the end portion of the hollow fiber sheet 32, and the air tube 40 is disposed so as to pass through the first and second potting agents 62, 64. In the regions sandwiched between the adjacent plate-shaped members 50, the region on the end portion side from the region filled with the above-described first potting agent 62 is filled with the second potting agent 64.

It is preferred that the opening of the end portion of each hollow fiber 34 be closed in advance before the second potting agent 64 is injected. As a result, the second potting agent 64 can be prevented from penetrating into the hollow portions of hollow fibers 34 and closing the hollow portions.

It is preferred that the second potting agent 64 provide the second potting agent cured product 60b, which will be obtained after curing, with the above-described properties and have a flowability sufficient to fill completely the region between the plate-shaped members 50b by injection. An urethane resin is preferred as such second potting agent 64. Examples of suitable urethane resins include two-component urethane resin adhesives comprising an isocyanate component and a curing agent component. Specific examples of isocyanate components include diisocyanate, isocyanate group-terminated prepolymers synthesized with a diisocyanate and a polyol, and modification products thereof. Examples of curing agent components include low-molecular polyols, high-molecular polyols, mixtures and modification products thereof. Among them, urethane resin adhesives containing liquid diphenylmethane diisocyanate as the isocyanate component and a mixture of a high-molecular polyol and a short-chain diol as the curing agent component is preferred because such adhesives have appropriate flowability.

The viscosity (viscosity of a mixture of an isocyanate component and a curing agent component) advantageous for injecting an urethane resin as the second potting agent 64 is preferably 0.1 to 10 Pa·s, more preferably 0.5 to 5 Pa·s. Where the viscosity is less than 0.1 Pa·s, there is a risk of the second potting agent 64 permeating into the hollow portions through the membrane surface of hollow fibers 34 and closing the hollow portions. On the other hand, where the viscosity exceeds 10 Pa·s, the second potting agent 64 sometimes cannot sufficiently penetrate into fine gaps between the hollow fibers 34 and plate-shaped members 50.

Then, the first and second potting agents 62, 64 are cured, respective first and second potting agent cured products 60a, 60b are obtained, and the potting portion 15 is formed. In this case, the first and second potting agents 62, 64 may be cured simultaneously, or they may be cured separately when they are cured by different curing methods. Where thermosetting resins are used as the first and second potting agents 62, 64 and they can be cured at room temperature, the curing method involves allowing the resins to stay at room temperature, and those resins that are cured by heating can be cured by heating the laminated structural body 70. On the other hand, where photocurable resins are used, the first and second potting agents are cured by irradiation with active light radiation.

When the potting portion 25 is formed, the structural laminated body 70 is disposed so that the fixing portion on the side that will serve as the water collecting header 20 (side where the air tubes 40 are not disposed) is on the top (see FIG. 8). Then, the second potting agent 64 is injected into this fixing portion, the first and second potting agents 62, 64 are thereafter cured, and the potting portion 25 is formed (third step). This process can be implemented in the same manner as the formation of the first potting portion 15. However, when the potting portion 25 is formed, the following operations are necessary to open the end portions of hollow fibers 34.

For example, first, when the second potting agent 64 is injected, the liquid surface thereof is positioned below (on the central side) the end portions of hollow fibers 34. As a result, after the second potting agent 64 has been cured, the end portions of the hollow fibers 34 protrude from the end surface on the end portion side of the potting portion 25 and the open state of these end portions is maintained.

On the other hand, when the second potting agent 64 is injected so that hollow fibers 34 are immersed to the end portions thereof, the end portions of the hollow fibers 34 are opened by cutting off the end portion side of the fixing portion after the second potting agent 64 has been cured. In this case, before the second potting agent 64 is injected, the end portions of hollow fibers 34 are plugged to prevent the second potting agent 64 from permeating into the hollow portions. The fixing portion is then cut off to remove the plugged portions of the hollow fibers 34. The hollow fibers 34 are thus also opened in the end surface on the end portion side of the potting portion 25.

After the potting portions 15, 25 have thus been formed in the structural laminated body 70, the casings 14, 24 are attached to the potting portions 15, 25, and the air header 10 and water collecting header 20 are formed. As a result, the hollow fiber module 100 having the above-described structure is obtained. The casings 14, 24 can be attached, for example, by inserting the potting portions 15, 25 into the casings 14, 24. In this case, where the potting portions 15, 25 are inserted into partial regions on the opening side (central side) in the casings 14, 24, the hollow structures that will serve as the air flow channel 16 and water collecting flow channel 26 are formed in respective other regions (regions on the end portion side).

The hollow fiber module and method for manufacturing same of the preferred embodiments are described above, but they are not limiting and may be appropriately modified without departing from the essence of the present invention.

For example, in the hollow fiber module 100 of the above-described configuration, the two potting portions 15 and 25 have a structure in which the plate-shaped members 50 are sandwiched between the adjacent hollow fiber sheets 32 and potting agents of a two-layer structure are provided, but the present invention is not limited thereto, and at least one potting portion may have such a structure. Further, in the above-described embodiment, the hollow fiber module 100 of a structure in which four hollow fiber sheets 32 are stacked is described by way of an example, but the number of hollow fiber sheets 32 can be randomly increased or decreased.

In the above-described method for manufacturing the hollow fiber module 100, the hollow fiber sheets 32 are prepared by cutting the hollow fiber 34 after it has been wound around a roll, but the hollow fiber sheets 32 may be also prepared by arranging the precut hollow fibers 34 side by side. Further, the first potting agent 62 is attached so as to sandwich the hollow fiber sheet 32 on the plate-shaped member 50 in the hollow fiber unit 36, but such a configuration is not limiting. For example, the first potting agent 62 may be also attached to the surface that is opposite the surface in the plate-shaped member 50 where the hollow fiber sheet 32 is disposed. In this case, the first potting agent 62 is also sandwiched between the adjacent plate-shaped members 50.

Further, for example, an outer wall portion such that surrounds the fixing portion may be provided in the laminated structural body 70, and the second potting agent 64 may be charged into the fixing portion so as to be injected into the outer wall portion. For example, such a procedure is effective when the end portion of the hollow fiber sheet 32 protrudes to the end portion side of the fixing portion. By applying such a feature, it is possible to employ, for example, a method by which the casings 14, 24 are attached to the fixing portions before the second potting agent 64 is injected, and then inject the second potting agent 64 into the casings 14, 24.

Furthermore, in the above-described embodiment, both the first and second potting agents 62, 64 are cured after the second potting agent 64 has been injected, but it is also possible to inject the second potting agent 64 after the first potting agent has been cured. When the uncured first potting agent 62 has sufficient properties (softness and the like), it is not necessary to cure the first potting agent 62.

## Claims

1. A method for manufacturing a hollow fiber module, comprising:
a first step of preparing a plurality of units in which a plurality of hollow fibers are provided side by side on plate-shaped members so that the hollow fibers are fixed on at least one end portion side thereof;
a second step of laminating the plurality of units so that portions of the plate-shaped members overlap via a first curable resin and filling a partial region on a side opposite the end portion side between the adjacent plate-shaped members with the first curable resin; and
a third step of filling a region on the end portion side from the partial region between the adjacent plate-shaped members with a second curable resin having a hardness after curing that is higher than that of the first curable resin, and then curing the second curable resin.

2. The method for manufacturing a hollow fiber module according to claim 1, wherein
in the second step, an air tube is disposed substantially parallel to the hollow fibers between at least one pair of the adjacent plate-shaped members, so as to pass through the first and second curable resins.

3. A hollow fiber module in which a plurality of sheet-like hollow fiber groups composed of a plurality of hollow fibers arranged side by side are laminated and both end portions thereof are fixed, wherein
at least one end portion is fixed by disposing plate-shaped members between the adjacent hollow fiber groups and filling a region between the adjacent plate-shaped members with a resin cured product.

4. The hollow fiber module according to claim 3, wherein the resin cured product is formed from a first resin cured product that fills a partial region on a side opposite the end portion side of the hollow fiber group between the adjacent plate-shaped members and a second resin cured product that has a hardness higher than that of the first resin cured product and fills a region on the end portion side from the partial region.

5. The hollow fiber module according to claim 3 or 4, wherein an air tube is disposed substantially parallel to the hollow fibers between at least one pair of the adjacent plate-shaped members, so as to pass through the resin cured products.
